# EUROPÄISCHE PATENTSCHRIFT

(11) **EP 2 252 000 B1**
(45) Veröffentlichungstag und Bekanntmachung des Hinweises auf die Patenterteilung: **09.10.2013**
(21) Anmeldenummer: 10002951.1
(22) Anmeldetag: 19.03.2010
(51) Int. Cl.: H04J 14/02

(54) **Optische WDM Sende- und Empfangseinrichtung und optische Transceivereinheit hierfür**
Optical WDM transmission and reception device and optical transceiver unit for same
Dispositif de transmission et réception WDM optique et unité d'émission-réception optique correspondante

(30) Priorität: 12.05.2009 DE 102009021010
(43) Veröffentlichungstag der Anmeldung: 17.11.2010
(73) Patentinhaber: ADVA Optical Networking SE, 82152 Martinsried / München (DE)
(72) Erfinder: Hinderthür, Henning, Dr., 86923 Finning (DE); Bleck, Oliver, 82538 Geretsried (DE)
(74) Vertreter: Eder, Thomas

(56) Entgegenhaltungen:
- EP-A1- 1 978 653
- EP-A2- 0 438 155
- US-A1- 2003 030 875
- US-A1- 2005 244 161

## Beschreibung

Die Erfindung betrifft eine optische WDM Sende- und Empfangseinrichtung mit den Merkmalen des Oberbegriffs des Patentanspruchs 1.

In optischen Übertragungsnetzen finden zur Übertragung großer Datenvolumen optische Wellenlängenmultiplex-Systeme (WDM-Systeme) Verwendung. In einem Netzknoten oder einem Terminal-Knoten einer einfachen Punkt-zu-Punkt Verbindung ist dabei jeweils eine optische Filtereinheit vorgesehen, welche zumindest eine optische Multiplexereinheit und eine optische Demultiplexereinheit umfasst. Die optische Multiplexereinheit weist eine vorbestimmte Anzahl n von Kanal-Eingangsports auf, und führt den Kanal- Eingangsports zugeführte optische Kanalsignale einem WDM-Ausgangsport zu, wobei die optischen Kanalsignale zu einem WDM-Signal kombiniert werden. Die optische Demultiplexereinheit weist einen WDM-Eingangsport auf, welchem das zu empfangende WDM-Signal zugeführt ist. Die Multiplexereinheit splittet das optische WDM-Empfangssignal in die einzelnen Kanalsignale auf und führt diese jeweils einem zugeordneten Kanal-Ausgangsport zu. Jedem Kanal-Eingangsport der Multiplexereinheit kann ein optisches Kanalsignal einer vorbestimmten optischen Trägerwellenlänge zugeführt werden, wobei die jeweilige optische Trägerwellenlänge des zugeführten optischen Signals der dem betreffenden Kanal-Eingangsport zugeordneten Kanalwellenlänge entsprechen muss, damit das betreffende optische Kanalsignal korrekt und mit möglichst geringer Einfügedämpfung dem WDM-Ausgangsport zugeführt werden kann.

In gleicher Weise kann ein in einem empfangenen optischen WDM-Signal enthaltenes Kanalsignal einer vorbestimmten optischen Trägerwellenlänge, die einer Kanalwellenlänge entsprechen muss, von der Demultiplexereinheit aus dem WDM-Empfangssignal extrahiert und dem zugeordneten Kanal-Ausgangsport zugeführt werden. Die Kanalwellenlängen für die Senderichtung und für die Empfangsrichtung sind dabei jeweils so gewählt, dass für einen Kanal i sowohl für die Senderichtung als auch für die Empfangsrichtung dieselbe optische Kanalwellenlänge verwendet wird.

Übliche optische Filtereinheiten weisen dabei meist eine Vielzahl, beispielsweise 40, Kanal-Eingangsports bzw. Kanal-Ausgangsports auf. Um eine bidirektionale Verbindung auf einem vorbestimmten Kanal zu ermöglichen, wird jeweils eine optische Transceivereinheit verwendet, die aus einem ihr zugeführten elektrischen Datensignal ein entsprechendes optisches Datensignal erzeugt, welches an einem optischen Ausgangsport der Transceivereinheit abgegeben wird. Dieser optische Ausgangsport der Transceivereinheit wird über einen Lichtwellenleiter mit dem zugehörigen Kanal-Eingangsport der Multiplexereinheit der optischen Filtereinheit verbunden. Hierzu muss selbstverständlich derjenige Kanal-Eingangsport der Multiplexereinheit gewählt werden, der hinsichtlich der Kanalwellenlänge der optischen Trägerwellenlänge des von der Transceivereinheit abgegebenen optischen Signals entspricht oder, mit anderen Worten, die Trägerwellenlänge des von der Transceivereinheit abgegebenen optischen Signals muss der Kanalwellenlänge des gewählten Kanal-Eingangsports der Multiplexereinheit entsprechen.

In gleicher Weise wird der zugehörige Kanal-Ausgangsport der Demultiplexereinheit, welcher die betreffende Kanalwellenlänge zugeordnet ist, mit einem Eingangsport der optischen Transceivereinheit verbunden, welcher in der Transceivereinheit das empfangene Kanalsignal einer Empfangseinheit der Transceivereinheit zuführt, die üblicherweise so breitbandig ausgebildet ist, dass sie in der Lage ist, jedes der möglichen Kanalsignale zu detektieren. Die Empfangseinheit setzt das optische Kanalsignal in ein entsprechendes elektrisches Datensignal um und kann gleichzeitig eine Signalaufbereitung und ggf. auch eine Signalverarbeitung vornehmen.

Derartige optische Transceivereinheiten wurden üblicherweise mit Sendeeinheiten versehen, welche ein optisches Sendemodul der gewünschten Kanalwellenlänge aufweist. Es war daher erforderlich, für jede Kanalwellenlänge eine optische Transceivereinheit mit der gewünschten (festen) Kanalwellenlänge vorzusehen.

In jüngerer Zeit wurden optische Transceivereinheiten mit durchstimmbaren Sendemodulen entwickelt. Bei derartigen Transceivereinheiten kann die das betreffende Sendemodul umfassende Sendeeinheit von einer Controllereinheit so angesteuert werden, dass aus dem der Transceivereinheit zugeführten elektrischen Datensignal ein optisches Sendesignal mit der gewünschten Kanalwellenlänge erzeugt wird. Die Controllereinheit führt der Sendeeinheit dabei üblicherweise nur eine Kanalinformation zu, d.h. es wird festgelegt, welche von mehreren möglichen diskreten Kanalwellenlängen für das zu erzeugende optische Sendesignal verwendet werden soll.

Mit derartigen durchstimmbaren Transceivereinheiten ist es möglich, eine Transceivereinheit zunächst mit einem beliebigen freien Kanal-Eingangsport der Multiplexereinheit einer optischen Filtereinheit zu verbinden. Selbstverständlich muss die Empfangseinheit der Transceivereinheit dabei mit dem zugeordneten Kanal-Ausgangsport der Demultiplexereinheit verbunden werden, welchem dieselbe Kanalwellenlänge zugeordnet ist. Bei bekannten Transceivermodulen wird der optischen Sendeeinheit dann die Information zugeführt, welche Kanalwellenlänge für das optische Sendesignal verwendet werden soll.

Hierbei besteht jedoch das Risiko, dass die Controllereinheit der optischen Sendeeinheit nicht die korrekte Information betreffend die zu wählende Kanalwellenlänge übermittelt wird, beispielsweise weil bei der Installation der Transceivereinheit die diese Installation vornehmende Person der Controllereinheit die falsche Information übermittelt hat. Neben diesem Risiko einer nicht korrekten Installation der Transceivereinheit, beispielsweise an einem bestehenden WDM-System wird durch die Notwendigkeit der korrekten Wahl der Kanalwellenlänge bei einer durchstimmbaren optischen Transceivereinheit auch ein entsprechender Aufwand verursacht. Denn diejenige Person, die einen Austausch einer Transceiverkarte vornimmt oder das bestehende System durch das hinzufügen einer oder mehrerer weiterer Transceiverkarten erweitert, muss sich vor der Installation darüber informieren, welche Kanalwellenlängen bereits belegt sind und welche Kanalwellenlängen des Systems noch zur Verfügung stehen bzw. auf welcher Kanalwellenlänge die zu ersetzende Transceivereinheit gesendet hat.

Wird die Kanalwellenlänge einer durchstimmbaren optischen Transceivereinheit nicht korrekt gewählt, so kann die Multiplexereinheit selbstverständlich das einem Kanal-Eingangsport zugeführte optische Signal, das nicht die korrekte Kanalwellenlänge aufweist, nicht in das zu sendende WDM-Signal integrieren.

Aus der US 2005/0244161 A1 ist ein optisches WDM-Übertragungssystem bekannt, bei dem in einer WDM-Übertragungseinrichtung die Kanalsignale vor dem Multiplexen jeweils gesplittet und zu einem Teil von einer Steuereinheit detektiert werden, wobei die Steuereinheit hier eine Zuordnung der erfassten Kanalsignale zu den betreffenden Eingangsports vornehmen kann. Das gemultiplexte WDM-Signal wird ebenfalls gesplittet, wobei der abgezweigte Teil von einem Spektrumanalysator detektiert und Informationen über das im WDM-Signal enthaltene Spektrum ebenfalls der Steuereinheit zugeführt werden. Da das WDM-Signal die Information enthält, welche Kanalsignale enthalten sind, und die vor dem Multiplexen erfassten Kanalsignale von der Steuereinheit einem bestimmten Eingangsport zugeordnet werden können, kann die Steuereinheit feststellen, an welchem Eingangsport welches Kanalsignal (mit einer bestimmten Mittenwellenlänge) zugeführt wird. Die Steuereinheit kann in der entgegengesetzten Richtung einer weiteren Steuereinheit die Information übermitteln, ob das betreffende Kanalsignal nach dem Multiplexer detektiert werden konnte. Falls nicht, kann in einem Scanprozess die Kanalwellenlänge solange auf jeweils einen anderen Kanal geändert werden, bis die Steuereinheit nach dem Multiplexer ein Kanalsignal detektiert. Dieses System ist zwar äußerst flexibel gestaltet, bedingt jedoch durch die Verwendung eines Spektrumanalysators sowie zweier Steuereinheiten einen entsprechend hohen Aufwand.

Aus der EP 1 978 653 A1 ist ein optisches WDM System bekannt, bei dem eine Vielzahl von optischen Netzeinheiten (ONUs) mittels einer Sternstruktur mit einem optischen Line Terminal (OLT) verbunden sind. Im OLT und den ONUs werden jeweils durchstimmbare Sendeelemente verwendet. In den ONUs ist jeweils eine Tabelle gespeichert, welche die paarweise Zuordnung der Kanalwellenlängen von Upstream- und Downstream-Kanälen und deren Status "betegt" bzw. "frei" enthält, mit welchen jeder der ONUs mit dem OLT verbunden ist. Mittels eines durchstimmbaren Filters kann jeder ONU detektieren, welche Wellenlängen des gesplitteten WDM-Signals belegt sind und damit auch welche Kanäle noch frei sind. Jeden der freien Kanäle dann der ONU dann für die Empfangsrichtung verwenden und das durchstimmbare Filter entsprechend einstellen. Aus der Tabelle kann der ONU dann die zugeordnete Sendewellenlänge entnehmen und den durchstimmbaren Sender so ansteuern, dass auf der betreffenden Kanalwellenlänge gesendet wird.

Ausgehend von diesem Stand der Technik liegt der Erfindung die Aufgabe zugrunde, eine einfach aufgebaute optische WDM Sende- und Empfangseinrichtung zu schaffen, welche einen möglichst einfachen Anschluss einer Transceivereinheit an eine Filtereinheit der optischen WDM Sende- und Empfangseinrichtung ermöglicht, wobei auch das Risiko einer fehlerhaften Einstellung der Kanalwellenlänge reduziert bzw. vermieden wird.

Die Erfindung löst diese Aufgabe mit den Merkmalen des Patentanspruchs 1.

Die Erfindung geht von der Erkenntnis aus, dass im Fall einer durchstimmbaren optischen Transceivereinheit eine selbsttätige Einstellung der korrekten optischen Trägerwellenlänge des von der Transceivereinheit zu erzeugenden Kanalsignals erfolgen kann, wenn die Controllereinheit so ausgebildet ist, dass diese in einem Tuning-Modus das ihr von der Empfängereinheit zugeführte Empfangssignal auswertet und abhängig hiervon die Entscheidung trifft, welche Kanalwellenlänge die jeweils korrekte ist. Hierzu steuert die Controllereinheit die Sendeeinheit im Tuning-Modus zunächst so an, dass eine erste der möglichen Kanalwellenlängen für ein zu erzeugendes Tuning-Sendesignal verwendet wird. Dieses Sendesignal wird der Multiplexereinheit am betreffenden Kanal-Eingangsport zugeführt.

Die erfindungsgemäße optische WDM Sende- und Empfangseinrichtung weist einen optischen Verbindungspfad zwischen dem WDM-Ausgangsport der Multiplexereinheit und dem WDM-Eingangsport der Demultiplexereinheit auf. Hierzu wird, beispielsweise mittels eines breitbandigen 1x2-Kopplers ein geringer Teil der optischen Leistung des WDM-Sendesignals ausgekoppelt und mittels eines weiteren 1x2-Kopplers dem optischen Empfangspfad in Richtung auf den WDM-Eingangsport der Demultiplexereinheit zugeführt. Mittels dieses Loop-Back-Pfads ist es der erfindungsgemäßen optischen Transceivereinheit möglich, festzustellen, ob das gesendete Kanalsignal mit der jeweils aktuellen optischen Trägerwellenlänge (Kanalwellenlänge) tatsächlich auch am Ausgangsport der Multiplexereinheit vorhanden ist, was nur dann der Fall sein kann, wenn die Kanalwellenlänge für denbetreffenden Kanal-Eingangsport der Multiplexereinheit korrekt gewählt wurde.

Hierzu detektiert die Empfangseinheit der Transceivereinheit im Tuning-Modus und führt das in ein elektrisches Signal umgesetzte Empfangssignal der Controllereinheit zu. Die Controllereinheit verwendet ein Abbruchkriterium (welches auch mehrere Teilkriterien bzw. mehrere notwendige Voraussetzungen für das positive Bejahen des Abbruchkriteriums umfassen kann), um den Tuning-Modus nach dem Erreichen des Einstellens der korrekten Kanalwellenlänge beenden zu können.

Wird davon ausgegangen, dass an denjenigen Kanal-Ausgangsport der Demultiplexereinheit normalerweise kein Signal anliegen kann, wenn dieser Port vor dem Hinzufügen der Transceivereinheit unbeschaltet war, so kann das einfachste Abbruchkriterium darin bestehen, dass überhaupt eine optische Leistung an diesem Port detektiert wird. In diesem Fall wird die Controllereinheit den Tuning-Modus beenden, sobald ihr von der Empfangseinheit ein optisches Signal (mit ausreichender Leistung) zugeführt wird.

Ist das Abbruchkriterium nicht erfüllt, so steuert die Controllereinheit die optische Sendeeinheit der Transceivereinheit so an, dass eine weitere der möglichen Kanalwellenlängen für das zu erzeugende Tuning-Signal verwendet wird. Auch in diesem weiteren Schritt des Tuning-Modus wird wiederum detektiert, ob das Abbruchkriterium erfüllt ist. So werden erforderlichenfalls sämtliche zur Verfügung stehende Kanalwellenlängen nacheinander für das Erzeugen jeweils eines entsprechenden Tuning-Sendesignals verwendet, wobei das vorgegebene Abbruchkriterium in jedem Tuning-Schritt geprüft wird. Ist das Abbruchkriterium erfüllt, so wird der Tuning-Modus beendet und die Transceivereinheit kann zum normalen Sendebetrieb übergehen.

Als Tuning-Signal kann auch ein der Sendeeinheit der Transceivereinheit zugeführtes Datensignal verwendet werden, wobei im Tuning-Modus selbstverständlich keine korrekte bidirektionale Kommunikation möglich ist.

Nach einer Ausgestaltung der Erfindung kann die optische Sendeeinheit dem ihr zugeführten Datensignal auch eine charakteristische Eigenschaft aufprägen, wobei hierzu die Sendeeinheit in geeigneter Weise von der Controllereinheit angesteuert wird.

Nach einer anderen Ausgestaltung der Erfindung kann das Tuning-Sendesignal auch unabhängig von einem der Sendeeinheit zugeführten Datensignal erzeugt werden, wobei hierzu die Controllereinheit der Sendeeinheit ein geeignetes elektrisches Tuning-Sendesignal zuführen kann. Dieses Kennungssignal kann selbstverständlich ebenfalls vorgegebene charakteristische Eigenschaften aufweisen.

Nach einer Ausführungsform der Erfindung kann die charakteristische Eigenschaft des Kennungssignals oder die wenigstens eine dem Datensignal aufgeprägte charakteristische Eigenschaft ein bestimmter Parameter einer Modulationskomponente sein, vorzugsweise eine vorgegebene Modulationsfrequenz einer Amplitudenmodulation.

Beispielsweise kann die Controllereinheit die Sendeeinheit so ansteuern, dass ein hochbitratiges Datensignal relativ niederfrequent ein- und ausgeschaltet wird, wobei das Ein- und Ausschalten mit der vorbestimmten Frequenz erfolgt.

Selbstverständlich kann die Controllereinheit anstelle der Modulation eines hochbitratigen Sendesignals der Sendeeinheit auch ein Kennungssignal zuführen, welches ein amplitudenmoduliertes Signal mit einer einzigen oder mehreren verschiedenen Modulationsfrequenzen ist, wobei im Fall mehrerer Modulationsfrequenzen diese nicht gleichzeitig sondern zeitlich nacheinander übertragen werden. Beispielsweise kann das Sendemodul der Sendeeinheit im CW-Betrieb relativ niederfrequent ein- und ausgeschaltet werden.

Selbstverständlich sind jedoch auch andere Modulationsweisen und Modulationsverfahren möglich. Beispielsweise kann auch eine sinusförmige Modulation des Datensignals oder eines CW-Signals mit einem bestimmten Modulationsgrad, der auch kleiner als 100% sein kann, vorgenommen werden. Darüber hinaus ist es auch denkbar, eine Frequenz oder Phasenmodulation zu verwenden, um dem Tuning-Signal jeweils vorgegebene charakteristische Eigenschaften aufzuprägen.

Eine bestimmte charakteristische Eigenschaft, wie die Modulationsfrequenz einer Amplitudenmodulation, kann auch dazu verwendet werden, um eine der betreffenden Transceivereinheit eindeutig zugeordnete Kennung in das Tuning-Sendesignal zu integrieren. Selbstverständlich ist es ebenfalls möglich, nur einen Teil einer eindeutigen Kennung zu übertragen, auch wenn sich hierdurch eine reduzierte Sicherheit ergibt.

Die eindeutige Kennung kann beispielsweise in einer Seriennummer der Transceivereinheit oder in einer der Transceivereinheit zugeordneten Media-Access-Controll-Adresse bestehen.

Auf diese Weise ist es möglich, dass die Controllereinheit das ihr von der Empfangseinheit ggf. zugeführte optische Signal daraufhin überprüft, ob dieses Signal auch mit ausreichend hoher Sicherheit diejenigen charakteristischen Eigenschaften aufweist, die im jeweils gesendeten Tuning-Sendesignal enthalten sind.

Besteht die charakteristische Eigenschaft in einer Amplitudenmodulation mit vorbestimmter Frequenz, so kann die Controllereinheit das ihr zugeführte Empfangssignal (bei korrekter Kanalwellenlänge) phasensensitiv detektieren, so dass das Abbruchkriterium nur dann als erfüllt angesehen werden kann, wenn die Controllereinheit (bzw. ein darin enthaltener Lock-in Verstärker) ein Empfangssignal mit der jeweils vorbekannten Modulationsfrequenz detektiert.

Auf diese Weise ist es möglich zu unterscheiden, ob das detektierte Empfangssignal tatsächlich das gesendete Tuning-Signal ist, oder dieses zumindest umfasst. Andemfalls würde beispielsweise im Fall, dass auf dem gegenüberliegenden Ende der Übertragungsstrecke ein Signal mit der betreffenden Kanalwellenlänge gesendet wird, fälschlicherweise dieses von der Gegenseite der Übertragungsstrecke stammende Signal als Tuning-Empfangssignal erkannt und der Tuning-Modus abgebrochen, obwohl nicht die korrekte Kanalwellenlänge eingestellt wurde.

Neben einer Störung von der Gegenseite der Übertragungsstrecke (diese kann sowohl in Form eines Datensignals als auch in Form eines auf der Gegenseite verwendeten Tuning-Signals bestehen) kann auch eine Störung dadurch erfolgen, dass auf der jeweils selben Seite der Übertragungsstrecke noch eine weitere Transceivereinheit im Tuning-Modus arbeitet.

Um die Sicherheit noch weiter zu erhöhen, dass tatsächlich das jeweils von der betreffenden Transceivereinheit gesendete Tuning-Signal detektiert wurde, kann die Controllereinheit den Dämpfungswert zwischen dem detektierten Empfangssignal und dem optischen Tuning-Sendesignal ermitteln und das Abbruchkriterium zusätzlich nur dann als erfüllt ansehen, wenn der Dämpfungswert kleiner als ein vorgegebener Maximalwert ist, bei dessen Ermittlung insbesondere die Nebensprechdämpfungen der Multiplexereinheit und der Demultiplexereinheit der WDM Sende-und Empfangseinrichtung berücksichtigt werden sowie die Dämpfung des optischen Pfades, den das Tuning-Sendesignal bis zum Empfang durch die Empfangseinheit durchläuft.

Anderenfalls bestünde die Gefahr, dass auch ein Empfangssignal, welches lediglich durch Nebensprechen in der Multiplexer- bzw. Demultiplexereinheit erzeugt wurde, als korrektes Empfangssignal detektiert wird. Diese weitere Sicherheitsmaßnahme empfiehlt sich insbesondere dann, wenn eine hochempfindliche Detektion des Empfangssignals vorgenommen wird, beispielsweise mittels einer phasensensitiven Gleichrichtung.

In gleicher Weise kann die Controllereinheit auch den Dämpfungswert zwischen dem detektierten Empfangssignal und dem optischen Tuning-Sendesignal ermitteln und das Abbruchkriterium zusätzlich nur dann als erfüllt ansehen, wenn der Dämpfungswert größer als ein vorgegebener Maximalwert ist, bei dessen Ermittlung insbesondere die Einfügedämpfungen der Multiplexereinheit und der Demultiplexereinheit der WDM Sende- und Empfangseinrichtung berücksichtigt werden sowie die Dämpfung des optischen Pfades, den das Tuning-Sendesignal bis zum Empfang durch die Empfangseinheit durchläuft.

Hierdurch kann vermieden werden, dass ein Empfangssignal als korrektes Tuning-Empfangssignal erkannt wird, wobei dieses (mit der korrekten Kanalwellenlänge) zufälligerweise von einer anderen Transceivereinheit auf derselben Seite oder der gegenüberliegenden Seite der Übertragungsstrecke erzeugt wurde, wobei das von der "eigenen" Sendeeinheit erzeugte Kanalsignal noch auf einer "falschen" Wellenlänge liegt.

Nach einer weiteren Ausgestaltung der Erfindung kann im Loop-Back-Pfad der optischen WDM Sende-und Empfangseinrichtung eine optische Modulatoreinheit vorgesehen sein, welche von einer Steuereinheit der Filtereinheit ansteuerbar ist. Auf diese Weise kann dem Tuning-Signal eine zusätzliche Information aufgeprägt werden. Hierdurch lassen sich beispielsweise bestimmte Parameter der Filtereinheit an die jeweilige Transceivereinheit über-mitteln, wie beispielsweise Kenndaten der Multiplexereinheit, der Demultiplexereinheit, der Steuereinheit, eine Seriennummer, die Kanalanzahl und dergleichen.

Weitere Ausführungsformen der Erfindung ergeben sich aus den Unteransprüchen. Die Erfindung wird nachstehend anhand eines in der Zeichnung dargestellten Ausführungsbeispiels näher erläutert.

Die einzige Zeichnung zeigt ein schematisches Blockdiagramm einer optischen WDM Sende-und Empfangseinrichtung nach der Erfindung.

Die in der einzigen Fig. dargestellte WDM Sende-und Empfangseinrichtung 1 umfasst eine optische Transceivereinheit 3 und eine optische Filtereinheit 5.

Die optische Transceivereinheit 3 weist eine optische Sendeeinheit 7 auf, welcher über einen Datensignalport 9 ein elektrisches Datensignal S_{D, Tx} zuführbar ist. Hierzu kann selbstverständlich auch die Transceivereinheit 3 einen Datensignalport 11 aufweisen. Die optische Sendeeinheit 7 umfasst ein optisches Sendemodul 13, welches hinsichtlich seiner optischen Trägerwellenlänge durchstimmbar ist. Im normalen Arbeitsbetriebsmodus setzt die optische Sendeeinheit 7 das ihr zugeführte Datensignal S_{D}, _{Tx} in ein entsprechendes optisches Datensignal um. Selbstverständlich kann die optische Sendeeinheit auch eine erforderliche Signalbe- oder verarbeitung durchführen.

Eine Controllereinheit 15 der Transceivereinheit 3 steuert hierzu die Sendeeinheit 7 so an, dass an einem Ausgangsport 17 der Transceivereinheit 3 ein Signal mit einer vorbestimmten optischen Trägerwellenlänge abgegeben wird. Hierzu führt die Controllereinheit 15 der Sendeeinheit 7 ein Steuersignal S_{λi} zu. Das Steuersignal ist dabei vorzugsweise so beschaffen, dass der Sendeeinheit nur eine Kanalinformation übermittelt werden muss, um diese zu veranlassen, ein optisches Sendesignal mit einer bestimmten Kanalwellenlänge λᵢ zu erzeugen.

Die Kanalwellenlänge λᵢ ist dabei eine von n möglichen optischen Trägerwellenlängen von optischen Signalen, die von maximal n Transceivereinheiten 3 erzeugt und jeweils einem Kanal-Eingangsport CH, bis CHₙ einer optischen Multiplexereinheit 19 der optischen Filtereinheit 5 zugeführt werden.

In der Fig. ist der Ausgangsport der Transceivereinheit 3 dem Kanal-Eingangsport CHᵢ der Multiplexereinheit 19 zugeführt. Selbstverständlich können auch weitere (maximal n) Transceivereinheiten mit den übrigen Kanal-Eingangsports CH, bis CHᵢ₋₁ und CHᵢ₊₁ bis CHₙ verbunden sein. Jedem Kanal-Eingangsport CHᵢ der Multiplexereinheit 19 ist eine vorbestimmte Kanalwellenlänge λᵢ zugeordnet, wobei von jedem der Kanal-Eingangsports CH₁ bis CHₙ nur solche optischen Signale zu einem optischen WDM-Sendesignal S_{WDM,Tx} zusammengefasst werden, die eine mit der betreffenden Kanalwellenlänge λᵢ übereinstimmende optische Trägerwellenlänge aufweisen.

Dieses optische WDM-Sendesignal S_{WDM,Tx} wird über einen WDM-Ausgangsport 25 der Multiplexereinheit 19 und einen optischen Pfad 27 einem optischen Ausgangsport 21 der optischen Filtereinheit 5 zugeführt und über diesen an eine optische Übertragungsstrecke (nicht dargestellt) ausgegeben.

In gleicher Weise ist ein optisches WDM-Empfangssignal S_{WDM,Rx} einem WDM-Eingangsport 23 der optischen Filtereinheit 5 zuführbar. Dieser WDM-Eingangsport 23 steht über einen optischen Pfad 29 mit einem WDM-Eingangsport 31 einer Demultiplexereinheit 33 in Verbindung, so dass das WDM-Empfangssignal S_{WDM, Rx} auch dem WDM-Eingangsport 31 der Demultiplexereinheit 33 zugeführt wird.

Die Demultiplexereinheit 33 weist wiederum n Kanal-Ausgangsports auf, die in der Fig. mit ch₁ bis chₙ bezeichnet sind. Jedem der Kanal-Ausgangsports ch₁ bis chₙ ist jeweils die selbe Kanalwellenlänge λ₁ bis λₙ zugeordnet, wie dem betreffenden Kanal-Eingangsport CH₁ bis CHₙ.

Wie aus der Fig. ersichtlich, ist dementsprechend der Kanal-Ausgangsport CHᵢ mit einem Eingangsport 35 der Transceivereinheit 3 verbunden, welcher seinerseits mit einem Eingangsport einer Empfangseinheit 37 verbunden ist, welche von der optischen Transceiver-einheit 3 umfasst ist.

Im normalen Arbeitsbetriebs-Modus wird das dem WDM-Eingangsport 23 von der damit verbundenen Übertragungsstrecke (nicht dargestellt) zugeführte WDM-Empfangssignal S_{WDM, Rx} dem WDM-Eingangsport 31 der Demultiplexereinheit 33 zugeführt. Die Demultiplexereinheit 33 demultiplext das optische WDM-Empfangssignal S_{WDM, Rx} in die einzelnen Kanalsignale, die jeweils dem Kanal-Ausgangsport ch₁ bis chₙ zugeführt werden, welcher die betreffende Kanalwellenlänge λ₁ aufweist. Damit wird gemäß der Darstellung in der Fig. das Kanalsignal mit der Kanalwellenlänge λᵢ dem Eingangsport 35 der Transceivereinheit 3 und damit der Empfangseinheit 37 zugeführt. Die Empfangseinheit 37 wandelt das optische Kanalsignal in ein elektrisches Datensignal S_{D, Rx} um und gibt dieses an einem Datensignalport 39 der Transceivereinheit 3 aus.

Zum korrekten Betrieb der Transceivereinheit 3 an der Filtereinheit 5 ist es somit erforderlich, dass die Controllereinheit 15 die optische Sendeeinheit 7 so ansteuert, dass das dem betreffenden Kanal-Eingangsport CHᵢ zugeführte optische Signal die diesem Port zugeordnete Kanalwellenlänge λᵢ aufweist. Anderenfalls würde das optische Signal von der Multiplexereinheit 19 blockiert und kann nicht in das WDM-Sendesignal S_{WDM, Tx} integriert werden.

Wird eine Transceivereinheit 3 neu mit der optischen Filtereinheit 5 verbunden, so führt die Controllereinheit 15 in einem Tuning-Modus die nachstehend erläuterten Funktionen durch. Der Tuning-Modus kann dabei manuell oder von einer übergeordneten Steuereinheit durch das zuführen eines entsprechenden Ansteuersignals S_{T} ausgelöst werden.

Zunächst ist zu erwähnen, dass der Controllereinheit 15 von vornherein bekannt sein muss, welche diskreten Wellenlängen von dem WDM-System bzw. der WDM Sende-und Empfangseinrichtung 1 verwendet werden, in welches die Transceivereinheit 3 integriert werden soll. Denn ein vollständiges kontinuierliches Durchstimmen des optischen Sendemoduls wäre zu zeitaufwändig. Die diskreten Kanalwellenlängen können dabei von vornherein in der Controllereinheit 15 gespeichert sein. Selbstverständlich ist es jedoch ebenfalls möglich, der Controllereinheit 15 diese Information über eine geeignete Schnittstelle (nicht dargestellt) von einer übergeordneten Einheit zuzuführen.

Nachdem die Controllereinheit 15 in den Tuning-Modus versetzt wurde, führt diese der optischen Sendeeinheit 7 zunächst ein Signal S_{λi} zu, wobei hierdurch eine erste der möglichen Kanalwellenlängen eingestellt wird. Das heißt, infolge des ihr zugeführten Signals S_{λi} erzeugt die Sendeeinheit 7 ein Tuning-Signal Sₜₛ, welches die betreffende Kanalwellenlänge λᵢ aufweist.

Das Tuning-Signal Sₜₛ kann dabei auf verschiedene Weisen erzeugt werden: Es ist zum einen möglich, ein bereits anliegendes Datensignal S_{D, Tx} zu verwenden und dieses in ein entsprechendes optisches Signal umzusetzen, welches dann als Tuning-Signal Sₜₛ verwendet wird. Es ist ebenso möglich, das Datensignal S_{D}, _{Tx} zu ignorieren und stattdessen ein spezielles, eigenständiges Tuning-Signal zu erzeugen. Hierzu kann die Controllereinheit 15 der Steuereinheit 7 ein entsprechendes elektrisches Tuning-Signal S_{ts, el} zuführen. Dieses spezielle Tuning-Signal S_{ts, el} kann beispielsweise als niederfrequentes Signal mit einer festen Frequenz (egal ob sinusförmig oder rechteckförmig oder mit einer anderen periodischen Struktur) ausgebildet sein. In diesem Fall würde dann das optische Tuning-Signal Sₜₛ, das am Ausgangsport 17 der Transceivereinheit 3 abgegeben wird, einen entsprechenden zeitlichen Verlauf aufweisen, wobei die optische Trägerwellenlänge durch das Signal S_{λl} festgelegt ist, mit welchem die Controllereinheit 15 die Sendeeinheit 7 ansteuert.

Nach einer anderen Alternative kann das optische Signal S_{ts, el'}, welches ein relativ niederfrequentes Signal ist, als Modulationssignal für das hochbitratige Datensignal S_{D, Tx} verwendet werden.

Stimmt die im ersten Schritt des Tuning-Modus gewählte Kanalwellenlänge nicht mit der korrekten Kanalwellenlänge überein, die dem Kanal-Eingangsport CHᵢ zugeordnet ist, so wird das Tuning-Signal Sₜₛ nicht über die Multiplexereinheit 19 an deren WDM-Ausgangsport 25 übertragen. Damit kann mittels der Empfangseinheit 37 kein optisches Tuning-Empfangssignal Eₜₛ detektiert werden, welches optisch-elektrisch gewandelt als elektrisches Tuning-Empfangssignal E_{ts, el} der Controllereinheit 15 zugeführt werden könnte.

Der Empfang eines derartigen Tuning-Empfangssignals Eₜₛ wäre grundsätzlich bei korrekt gewählter Kanalwellenlänge möglich, da, wie aus der Fig. ersichtlich, die beiden optischen Pfade 27 und 29 mittels eines Loop-back-Pfads 41 verbunden sind. Dieser ist realisiert durch jeweils einen optischen 1 x2-Koppler 43, 45 in dem betreffenden optischen Pfad 27, 29. Die optischen Koppler 43, 45 sind dabei so ausgebildet, dass nur ein relativ kleiner Teil der Leistung des im Pfad 27 in Richtung auf den WDM-Ausgangsport 21 der Filtereinheit 5 geführten Signals ausgekoppelt und über den Loop-back-Pfad 41 in den optischen Pfad 29 in Richtung auf den WDM-Eingangsport 31 der Demultiplexereinheit 33 eingekoppelt wird.

Wird somit im ersten Schritt des Tuning-Modus keinerlei Empfangssignal detektiert, so steuert die Controllereinheit 15 die optische Sendeeinheit 7 so an, dass eine andere Kanalwellenlänge λᵢ eingestellt wird. Dieses schrittweise scannen wird so lange fortgesetzt, bis die Controllereinheit 15 ein Tuning-Empfangssignal E_{ts, el} detektiert, welches ihr von der optischen Empfangseinheit 37 zugeführt wird. An dieser Stelle sei bemerkt, dass die optische Empfangseinheit 37, wie üblich, so ausgebildet ist, dass jede der wählbaren Kanalwellenlängen detektierbar ist.

Wird der Controllereinheit 15 ein Tuning-Empfangssignal E_{ts, el} zugeführt, so kann diese Tatsache von der Controllereinheit 15 im einfachsten Fall bereits als Abbruchkriterium für die Schleife verwendet werden, die im Tuning-Modus zu durchlaufen ist, da die Controllereinheit 15 in diesem einfachsten Fall bereits das Vorliegen eines detektierten Signals E_{ts, el} mit beliebigen Eigenschaften als Anzeichen dafür werden kann, dass ein Signal über den Loop-back-Pfad 41 übertragen wurde und demzufolge die Sendeeinheit 7 mit der korrekten Sendewellenlänge bzw. Kanalwellenlänge arbeitet. Maßgeblich in diesem Fall ist nur ein bestimmter Mindestpegel für die Empfangsleistung des optischen Signals Eₜₛ.

Da jedoch auch über die Übertragungsstrecke dem betreffenden Kanal-Ausgangsport chᵢ der Demultiplexereinheit 39 ein Signal zugeführt werden kann, detektiert die Controllereinheit 15 vorzugsweise ob das ihr zugeführte Tuning-Empfangssignal E_{ts, el} eine ihr bekannte charakteristische Eigenschaft aufweist.

Wie bereits vorstehend erwähnt, kann die Controllereinheit 15 die Sendeeinheit 7 so ansteuern, dass ein bestimmtes spezielles Tuning-Signal Sₜₛ erzeugt wird, welches beispielsweise eine bestimmte (niedrige) Grundfrequenz aufweist. Detektiert die Controllereinheit 15 dieselbe charakteristische Eigenschaft auch im ihr zugeführten Tuning-Empfangssignal E_{ts, el}, so kann mit relativ hoher Sicherheit davon ausgegangen werden, dass dieses Empfangssignal durch das Sendesignal Sₜₛ erzeugt wurde, welches über den Loop-back-Pfad 41 der Empfangseinheit 37 zugeführt wurde. Für das Erzeugen entsprechender charakteristischer Eigenschaften des Tuning-Signals Sₜₛ existieren selbstverständlich eine Vielzahl unterschiedlicher Möglichkeiten, die ein Fachmann in Betracht ziehen wird, wie beispielsweise die vorstehend genannte Möglichkeit einer Amplitudenmodulation. Als weitere Möglichkeiten bieten sich frequenz- oder phasenmodulierte Signale mit bestimmten charakteristischen Eigenschaften an.

Um nicht zufällig doch fälschlicherweise ein Tuning-Empfangssignal E_{ts, el} als korrektes "Empfangssignal" zu detektieren, welches beispielsweise von einer weiteren Transceivereinheit 3 erzeugt werden kann, die sich am anderen Ende der Übertragungsstrecke in einem Tuning-Modus befindet (auch wenn dieser Fall sehr unwahrscheinlich ist), kann das Tuning-Signal Sₜₛ dadurch eindeutig gemacht werden, dass dieses Signal die Information einer eindeutigen Seriennummer oder MAC-Adresse der betreffenden Transceivereinheit 3 beinhaltet. Existieren beispielsweise fünfstellige eindeutige Seriennummern, so genügen 10⁵ unterschiedliche Werte für eine oder mehrere bestimmte charakteristische Eigenschaften (oder Parameter) des Tuning-Signals. Beispielsweise können 10⁵ unterschiedliche Frequenzwerte für die Amplitudenmodulation gewählt werden. Die Controllereinheit 15 kann dann nicht nur detektieren, dass bei korrekt gewählter Kanalwellenlänge λᵢ ein Signal detektiert wird, sondern auch überprüfen ob das detektierte Signal die ihr bekannte Kennung, nämlich die der Seriennummer entsprechende Modulationsfrequenz aufweist.

Beispielsweise kann mittels eines in der Controllereinheit 15 integrierten Lock-In-Verstärkers auch die jeweilige Modulationsfrequenz detektiert werden. Die Controllereinheit 15 kann dann das Abbruchkriterium für die Tuning-Schleife nur dann als erfüllt ansehen, wenn das Tuning-Empfangssignal E_{ts, el} die korrekte, der Seriennummer entsprechende Frequenz aufweist.

Selbstverständlich ist es ebenfalls möglich, einer bestimmten Frequenz nicht die gesamte Seriennummer bzw. die gesamte Kennung oder MAC-Adresse zuzuordnen, beispielsweise wenn eine entsprechende erforderliche Anzahl von unterschiedlichen Kennungen bzw. Modulationsfrequenzen beim Empfang nicht mehr aufgelöst werden kann. Es bietet sich in diesem Fall an, nur eine kleinere Anzahl von Stellen, beispielsweise nur ein, zwei oder drei Stellen der Seriennummer oder Kennung zur Erzeugung eines bestimmten Wertes für die charakteristische Eigenschaft bzw. Frequenz des Tuning-Signals Sₜₛ zu verwenden. Sollen zur Sicherheit dennoch sämtliche Stellen im Tuning-Empfangssignal abgeprüft werden, so kann die Übertragung sämtlicher Stellen der Seriennummer oder Kennung auch zeitlich nacheinander erfolgen.

Als zusätzliche Sicherheit kann auch der Empfangspegel für das Signal E_{ts, el} hinsichtlich seiner Plausibilität abgeprüft werden.

Beispielsweise kann die Controllereinheit 15 detektieren, ob der Empfangspegel für das Empfangssignal Eₜₛ größer ist als eine vorgegebene Schranke. Denn bei einer extrem empfindlichen Detektion des Empfangssignals könnte theoretisch auch ein Signal erfasst werden, welches durch ein Kanalsignal mit der falschen Wellenlänge erzeugt wird, wobei ein entsprechendes Empfangssignal durch endliche Werte für die Nebensprechdämpfung der Multiplexereinheit bzw. Demultiplexereinheit 19, 33 erzeugt wurden.

Die Sicherheit kann daher erhöht werden, wenn die Controllereinheit 15 das Abbruchkriterium nur dann als erfüllt ansieht, wenn das Tuning-Empfangssignal Eₜₛ einen bestimmten Empfangspegel überschreitet.

Um zusätzlich auszuschließen, dass vom anderen Ende der Übertragungsstrecke her ein Signal empfangen wird welches zufälligerweise dieselben charakteristischen Eigenschaften (des zeitlichen Verlaufs) aufweist, wie das momentan von der Sendeeinheit 7 gesendete Signal Sₜₛ (das jedoch die falsche Kanalwellenlänge aufweist), kann die Controllereinheit 15 zusätzlich abprüfen, ob das Empfangssignal Sₜₛ (bzw. das entsprechende elektrische Empfangssignal E_{ts, el}) einen vorgegebenen Maximalpegel nicht überschreitet. Dieser ist festgelegt durch die vorgegebene Einfügedämpfung des optischen Pfads zwischen dem Ausgangsport 17 und dem Eingangsport 35 der Transceivereinheit 3 über den Weg der durch den Loop-back-Pfad 41 festgelegt ist.

Somit kann die Controllereinheit 15 als charakteristische Eigenschaften des Empfangssignals Eₜₛ neben dessen zeitlichem Verlauf auch den Pegel des Empfangssignals daraufhin prüfen, ob dieser in einem zulässigen Bereich liegt.

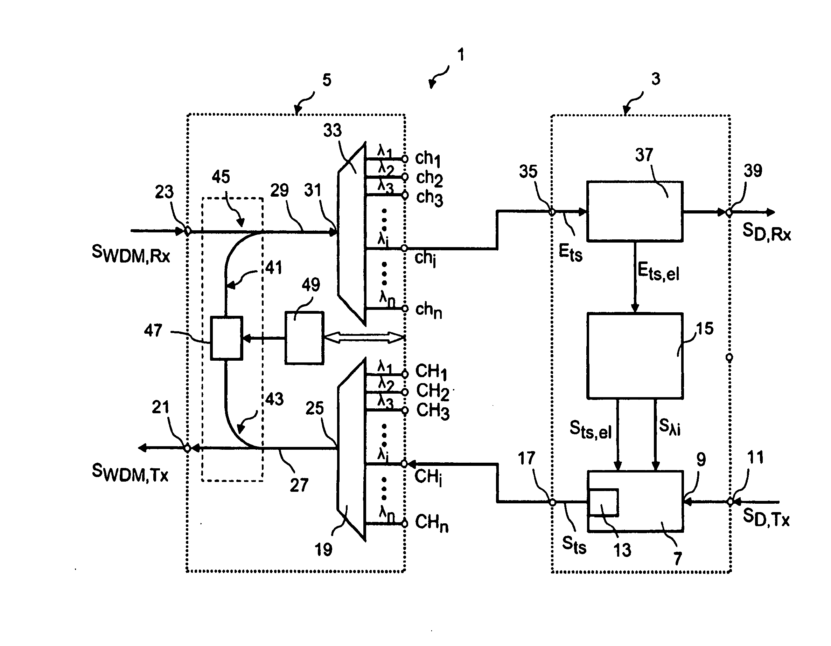

Des Weiteren kann wie aus der Fig. ersichtlich, im Loop-back-Pfad 41 eine Modulatoreinheit 47 vorgesehen sein, die von einer Steuereinheit 49 der Filtereinheit 5 ansteuerbar ist. Die Modulatoreinheit 49 kann, wie in Fig. 1 mittels des Doppelpfeils dargestellt, auch mit einer übergeordneten Steuereinheit verbunden sein. Mittels der optischen Modulatoreinheit 47 kann die Steuereinheit 49 dem Signal, welches über den Loop-back-Pfad 41 geführt wird, somit eine zusätzliche Information aufprägen. Diese Information kann ebenfalls von der Controllereinheit 15 empfangen werden. Hierbei kann es sich um bestimmte Eigenschaften oder Kenndaten der Filtereinheit handeln, wie beispielsweise die Seriennummer, die Kanalanzahl, die Trägerwellenlängen der Kanäle und dergleichen.

Detektiert die Controllereinheit 15 das Abbruchkriterium als erfüllt, so wird der Tuning-Modus beendet. Wird in keinem der einzelnen Schritte des Tuning-Modus das Abbruchkriterium als erfüllt detektiert, beispielsweise weil der Eingangsport 35 der Transceivereinheit 3 nicht mit dem korrekten Kanal-Ausgangsport ch₁ bis chₙ verbunden ist, so kann ein Fehlersignal erzeugt werden.

Eine so beschaffene WDM Sende-und Empfangseinrichtung bzw. eine derartige optische Transceivereinheit ermöglicht das selbsttätige Einstellen der korrekten Kanalwellenlänge, ohne dass hierzu ein wesentlicher Eingriff einer Bedienperson erforderlich wäre (abgesehen vom ggf. erforderlichen Start des Tuning-Modus). Hierdurch werden Fehlermöglichkeiten bei der Inbetriebnahme einer derartigen Transceivereinheit drastisch reduziert.

## Patentansprüche

1. Optische WDM Sende- und Empfangseinrichtung mit einer optische Transceivereinheit (3) und einer optischen Filtereinheit (5),
(a) wobei die optische Transceivereinheit (3) eine Sendeeinheit (7) aufweist,
(i) welcher an einem Datensignalport (9) ein Datensignal (S_{d,Tx}) zuführbar ist, welches die Sendeeinheit (7) in ein entsprechendes optisches Sendesignal gewandelt einem optischen Ausgangsport (17) der Transceivereinheit (3) zuführt, der mit einem vorbestimmten Kanal-Eingangsport (CH₁ bis CHₙ) einer von der optischen Filtereinheit (5) umfassten optischen Multiplexereinheit (19) verbindbar ist, wobei jedem Kanal-Eingangsport(CH₁ bis CHₙ) der optischen Multiplexereinheit (19) eine eigene Kanalwellenlänge (λ₁ bis λₙ)zugeordnet ist, und
(ii) welche ein optisches Sendemodul (13) aufweist, das hinsichtlich seiner optischen Trägerwellenlänge über einen vorbestimmten Wellenlängenbereich durchstimmbar ist,
(iii) wobei die Sendeeinheit (7) so ausgebildet ist, dass innerhalb des vorbestimmten Wellenlängenbereichs diskrete Wellenlängen einstellbar sind, die jeweils den Kanalwellenlängen (λ₁ bis λₙ) entsprechen,
(b) wobei die optische Transceivereinheit (3) eine Empfangseinheit (37) aufweist, welcher über eine Eingangsport (35) der optischen Transceivereinheit (3) von einem Kanal-Ausgangsport (ch₁ bis chₙ) einer von der optischen Filtereinheit (5) umfassten optischen Demultiplexereinheit(33), deren Kanal-Ausgangsports (ch₁ bis chₙ) jeweils dieselben Kanalwellenlängen (λ₁ bis λₙ) zugeordnet sind, wie den Kanal-Eingangsports (CH₁ bis CHₙ) der optischen Multiplexereinheit (19), ein optisches Empfangssignal zuführbar ist, welches die Empfangseinheit (37) in ein elektrisches Empfangssignal wandelt, und
(c) wobei die optische Transceivereinheit (3) eine Controllereinheit (15) aufweist, welche die Sendeeinheit (7) so ansteuert, dass ein optisches Sendesignal mit einer vorgegebenen Kanalwellenlänge (λ₁ bis λₙ) erzeugt wird,
(d) wobei die Empfangseinheit (37) das optisch-elektrisch gewandelte Empfangssignal der Controllereinheit (15) zuführt,
**dadurch gekennzeichnet,**
(e) **dass** dem mit dem Ausgangsport (17) der optischen Transceivereinheit (3) verbundenen Kanal-Eingangsport (CH₁ bis CHₙ) der optischen Multiplexereinheit (19) dieselbe Kanalwellenlänge (λ₁ bis λₙ) zugeordnet ist wie dem mit dem Eingangsport (35) der optischen Transceivereinheit (3) verbundenen Kanal-Ausgangsport (ch₁ bis chₙ) der optischen Demultiplexereinheit (33),
(f) **dass** ein Teil der optischen Leistung des an einem WDM-Ausgangsport (25) der Multiplexereinheit (19) erzeugten WDM-Sendesignals (S_{SDM,Tx}) über einen Loop-back-Pfad auf einen WDM-Eingangsport (31) der Demultiplexereinheit (33) zurückgeführt wird, und
(g) **dass** die Controllereinheit (15) in einen Tuning-Modus steuerbar ist, in welchem folgende Aktionen ausgeführt werden:
(i) Die Controllereinheit (15) steuert die Sendeeinheit (7) so an, dass ein optisches Tuning-Sendesignal (Sₜₛ) mit einer vorgegebenen Kanalwellenlänge (λ₁ bis λₙ) erzeugt wird;
(ii) Die Controllereinheit(15) wertet daraufhin ein ihr als Reaktion auf das erzeugte Tuning-Sendesignal (Sₜₛ) zugeführtes Empfangssignal (Eₜₛ) aus, ob ein Abbruchkriterium für den Tuning-Modus erfüllt ist oder nicht;
(iii) Ist das Abbruchkriterium erfüllt, so beendet die Controllereinheit (15) den Tuning-Modus und steuert in einem Arbeitsbetrieb der Transceivereinheit (3) die Sendeeinheit (7) so an, dass das am Datensignalport (9) zugeführte Datensignal (S_{d,Tx}) in ein optisches Sendesignal mit derjenigen Kanalwellenlänge (λ₁ bis λₙ) gewandelt wird, für die im Tuning-Modus das Abbruchkriterium detektiert wurde;
(iv) Ist das Abbruchkriterium nicht erfüllt, so setzt die Controllereinheit (15) den Tuning-Modus mit einem weiteren Schritt gemäß den Merkmalen (g) (ii) und (g) (iii) des Anspruchs fort, wobei die Controllereinheit (15) in dem weiteren Schritt die Sendeeinheit so ansteuert, dass ein optisches Tuning-Signal (Sₜₛ) mit einer im Tuning-Modus bisher nicht verwendeten Kanalwellenlänge (λ₁ bis λₙ) erzeugt wird.

2. Optische WDM Sende- und Empfangseinrichtung nach Anspruch 1, **dadurch gekennzeichnet, dass** die Sendeeinheit (7) in jedem Tuning-Schritt das optische Tuning-Sendesignal(Sₜₛ) mit der jeweils verwendeten Kanalwellenlänge (λ₁ bis λₙ) derart erzeugt,
(a) dass das Tuning-Sendesignal (Sₜₛ) dem der Sendeeinheit (7) zugeführten Datensignal (S_{D,Tx}) entspricht oder
(b) dass das Tuning-Sendesignal (Sₜₛ) dem der Sendeeinheit (7) zugeführten Datensignal (S_{D,Tx}) entspricht, wobei dem Datensignal (S_{D,Tx}) wenigstens eine charakteristische Eigenschaft aufgeprägt ist, welche die Controllereinheit (15) an die Sendeeinheit (7) übermittelt, oder
(c) dass das Tuning-Sendesignal (Sₜₛ) einem von der Controllereinheit (15) der Sendeeinheit (7) zugeführten Kennungssignal(S_{ts,el}) entspricht, welches wenigstens eine charakteristische Eigenschaft aufweist.

3. Optische WDM Sende- und Empfangseinrichtung nach Anspruch 2, **dadurch gekennzeichnet, dass** die wenigstens eine charakteristische Eigenschaft des Kennungssignals (S_{ts,el}) oder die wenigstens eine dem Datensignal (S_{D,Tx}) aufgeprägte charakteristische Eigenschaft ein bestimmter Parameter einer Modulationskomponente ist, vorzugsweise mit einer vorgegebenen Modulationsfrequenz einer Amplitudenmodulation.

4. Optische WDM Sende- und Empfangseinrichtung nach Anspruch 3, **dadurch gekennzeichnet, dass** die Controllereinheit (15) der Sendeeinheit (7) ein Kennungssignal (S_{ts,el}) zuführt, welches ein amplitudenmoduliertes Signal mit einer einzigen Modulationsfrequenz oder mit mehreren verschiedenen Modulationsfrequenzen ist, welche in zeitlicher Abfolge variieren.

5. Optische WDM Sende- und Empfangseinrichtung nach Anspruch 4, **dadurch gekennzeichnet, dass** jede Modulationsfrequenz nach einem der Controllereinheit (15) bekannten, vorgegebenen Schema einer Ziffer oder einer Ziffernfolge zugeordnet ist, wobei die betreffende Ziffer oder Ziffernfolge Bestandteil einer eindeutigen Kennung der Transceivereinheit (3) ist, beispielsweise der Seriennummer oder der Media-Access-Control-Adresse der Transceivereinheit (3).

6. Optische WDM Sende- und Empfangseinrichtung nach einem der vorhergehenden Ansprüche, **dadurch gekennzeichnet, dass** die Controllereinheit (15) das Abbruchkriterium als erfüllt ansieht, wenn das Tuning-Empfangssignal (Eₜₛ) einen vorgegebenen Mindestempfangspegel erreicht oder überschreitet.

7. Optische WDM Sende- und Empfangseinrichtung nach Anspruch 6, **dadurch gekennzeichnet, dass** die Controllereinheit (15) das Abbruchkriterium als erfüllt ansieht, wenn zusätzlich das Tuning-Empfangssignal (Eₜₛ) mit dem Tuning-Sendesignal (Sₜₛ) identisch ist oder vorgegebene charakteristische Eigenschaften des Tuning-Sendesignals(Sₜₛ) aufweist.

8. Optische WDM Sende- und Empfangseinrichtung nach Anspruch 7 bei dessen indirektem Rückbezug auf Anspruch 4, **dadurch gekennzeichnet, dass** die Controllereinheit(15) das Tuning-Empfangssignal (Eₜₛ) phasensensitiv detektiert und hierzu als Information die jeweils bekannte Modulationsfrequenz verwendet.

9. Optische WDM Sende- und Empfangseinrichtung nach einem der Ansprüche 6 bis 8, **dadurch gekennzeichnet, dass** die Controllereinheit (15) den Dämpfungswert zwischen dem detektierten Tuning-Empfangssignal (Eₜₛ) und dem optischen Tuning-Sendesignal (Sₜₛ) ermittelt und das Abbruchkriterium zusätzlich nur dann als erfüllt ansieht, wenn der Dämpfungswert kleiner als ein vorgegebener Maximalwert ist, bei dessen Ermittlung insbesondere die Nebensprechdämpfungen der Multiplexereinheit (19) und der Demultiplexereinheit (33) der optischen Filtereinheit (5) der WDM Sende- und Empfangseinrichtung berücksichtigt werden sowie die Dämpfung des optischen Pfades, den das Tuning-Sendesignal (Sₜₛ) bis zum Empfang als Tuning-Empfangssignal (Eₜₛ) durch die Empfangseinheit (37) durchläuft.

10. Optische WDM Sende- und Empfangseinrichtung nach einem der Ansprüche 6 bis 9, **dadurch gekennzeichnet, dass** die Controllereinheit (15) den Dämpfungswert zwischen dem detektierten Tuning-Empfangssignal (Eₜₛ) und dem optischen Tuning-Sendesignal(Sₜₛ) ermittelt und das Abbruchkriterium zusätzlich nur dann als erfüllt ansieht, wenn der Dämpfungswert größer als ein vorgegebener Maximalwert ist, bei dessen Ermittlung insbesondere die Einfügedämpfungen der Multiplexereinheit (19) und der Demultiplexereinheit (33) der WDM Sende- und Empfangseinrichtung (1) berücksichtigt werden sowie die Dämpfung des optischen Pfades, den das Tuning-Sendesignal (Sₜₛ) bis zum Empfang durch die Empfangseinheit als Tuning-Empfangssignal (Eₜₛ) durchläuft.

11. Optische WDM Sende- und Empfangseinrichtung nach einem der vorhergehenden Ansprüche, **dadurch gekennzeichnet,**
(a) **dass** der WDM-Ausgangsport (25) der Multiplexereinheit (19) mit einem Eingangsport einer optischen Splittereinheit (43) verbunden ist, deren einer Ausgangsport mit einer optischen Übertragungsstrecke verbindbar ist und deren anderer Ausgangsport mit dem Loop-back-Pfad verbunden ist, und
(b) **dass** der WDM-Eingangsport (31) der Demultiplexereinheit (33) mit einem Ausgangsport einer optischen Combinereinheit (45) verbunden ist, deren einer Eingangsport mit der optischen Übertragungsstrecke verbindbar ist und deren anderer Eingangsport mit dem Loop-back-Pfad verbunden ist.

12. Optische WDM Sende- und Empfangseinrichtung nach einem der vorhergehenden Ansprüche, **dadurch gekennzeichnet, dass** im Loop-back-Pfad eine optische Modulatoreinheit(47) angeordnet ist, welche von einer Steuereinheit (49) ansteuerbar ist und dass die Controllereinheit (15) der Transceivereinheit (3) im Tuning-Modus die von der Steuereinheit (49) mittels der optischen Modulatoreinheit (47) dem detektierten Tuning-Empfangssignal (Eₜₛ) aufmodulierte Information erfasst und auswertet und/oder speichert.

13. Optische WDM Sende- und Empfangseinrichtung nach Anspruch 12, **dadurch gekennzeichnet, dass** die Information Kenndaten der die Multiplexereinheit(19), die Demultiplexereinheit (33), die Steuereinheit (49) und den Loop-back-Pfad einschließlich Modulator (47) umfassenden WDM-Filtereinheit (5) beinhaltet.

14. Optische WDM Sende- und Empfangseinrichtung nach Anspruch 13, **dadurch gekennzeichnet, dass** die Kenndaten die Seriennummer und/oder die Kanalanzahl und/oder die Trägerwellenlängen der einzelnen Kanäle umfassen.

## Claims

1. An optical WDM transmitting and receiving device having an optical transceiver unit (3) and an optical filter unit (5),
(a) wherein the optical transceiver unit (3) has a transmitting unit (7),
(i) to which at a data signal port (9) a data signal (S_{d,Tx}) can be fed which, converted into a corresponding optical transmission signal, is fed by the transmitting unit (7) to an optical output port (17) of the transceiver unit (3) that can be connected to a predetermined channel input port (CH₁ to CHₙ) of an optical multiplexer unit (19) contained within the optical filter unit (5), wherein each channel-input port (CH₁ to CHₙ) of the optical multiplexer unit (19) has its own channel wavelength (λ₁ to λₙ) associated with it, and
(ii) which has an optical transmitting module (13) that can be tuned with respect to its optical carrier wavelength across a predetermined range of wavelengths,
(iii) wherein the transmitting unit (7) is formed in such a way that within the predetermined range of wavelengths discrete wavelengths can be set that correspond, respectively, to the channel wavelengths (λ₁ to λₙ),
(b) wherein the optical transceiver unit (3) has a receiving unit (37) to which an optical reception signal can be fed by way of an input port (35) of the optical transceiver unit (3) from a channel output port (ch₁ to chₙ) of an optical demultiplexer unit (33), which is contained within the optical filter unit (5) and the channel output ports (ch₁ to chₙ) of which have, respectively, the same channel wavelengths (λ₁ to λₙ) associated with them as the channel input ports (CH₁ to CHₙ) of the optical multiplexer unit (19), and the optical reception signal is converted by the receiving unit (37) into an electrical reception signal, and
(c) wherein the optical transceiver unit (3) has a controller unit (15) which activates the transmitting unit (7) in such a way that an optical transmission signal with a preset channel wavelength (λ₁ to λₙ) is generated,
(d) wherein the receiving unit (37) feeds the optoelectrically converted reception signal to the controller unit (15),
**characterised**
(e) **in that** the same channel wavelength (λ₁ to λₙ) is associated with the channel input port (CH₁ to CHₙ) of the optical multiplexer unit (19) that is connected to the output port (17) of the optical transceiver unit (3) as with the channel output port (ch₁ to chₙ) of the optical demultiplexer unit (33) that is connected to the input port (35) of the optical transceiver unit (3),
(f) **in that** a portion of the optical power of the WDM transmission signal (S_{SDM, Tx}) generated at a WDM output port (25) of the multiplexer unit (19) is returned by way of a loop-back path to a WDM input port (31) of the demultiplexer unit (33), and
(g) **in that** the controller unit (15) can be controlled so as to be set into a tuning mode in which the following actions are carried out:
(i) the controller unit (15) activates the transmitting unit (7) so that an optical tuning transmission signal (Sₜₛ) with a preset channel wavelength (λ₁ to λₙ) is generated;
(ii) the controller unit (15) thereupon evaluates a reception signal (Eₜₛ) fed to it, as a reaction to the tuning transmission signal (Sₜₛ) that is generated, to determine whether an abort criterion for the tuning mode is met or not;
(iii) if the abort criterion is met, the controller unit (15) terminates the tuning mode and activates the transmitting unit (7) in a working operation of the transceiver unit (3) in such a way that the data signal (S_{d,Tx}) fed at the data signal port (9) is converted into an optical transmission signal with that channel wavelength (λ₁ to λₙ) for which the abort criterion was detected in the tuning mode;
(iv) if the abort criterion is not met, the controller unit (15) continues the tuning mode with a further step in accordance with features (g)(ii) and (g)(iii) of the claim, wherein the controller unit (15) activates the transmitting unit in the further step in such a way that an optical tuning signal (Sₜₛ) with a channel wavelength (λ₁ to λₙ) not previously used in the tuning mode is generated.

2. An optical WDM transmitting and receiving device according to claim 1, **characterised in that** in each tuning step the transmitting unit (7) generates the optical tuning transmission signal (Sₜₛ) with the channel wavelength (λ₁ to λₙ) that is used respectively in such a way
(a) that the tuning transmission signal (Sₜₛ) corresponds to the data signal (S_{D,Tx}) fed to the transmitting unit (7), or
(b) that the tuning transmission signal (Sₜₛ) corresponds to the data signal (S_{D,Tx}) fed to the transmitting unit (7), wherein there is impressed upon the data signal (S_{D,Tx}) at least one characteristic property which the controller unit (15) conveys to the transmitting unit (7), or
(c) that the tuning transmission signal (Sₜₛ) corresponds to an identification signal (S_{ts,el}) that is fed to the transmitting unit (7) by the controller unit (15) and has at least one characteristic property.

3. An optical WDM transmitting and receiving device according to claim 2, **characterised in that** the at least one characteristic property of the identification signal (S_{ts,el}) or the at least one characteristic property impressed upon the data signal (S_{D,Tx}) is a certain parameter of a modulation component, preferably with a preset modulation frequency of an amplitude modulation.

4. An optical WDM transmitting and receiving device according to claim 3, **characterised in that** the controller unit (15) feeds to the transmitting unit (7) an identification signal (S_{ts,el}) which is an amplitude-modulated signal with a single modulation frequency or with a plurality of different modulation frequencies which vary in temporal sequence.

5. An optical WDM transmitting and receiving device according to claim 4, **characterised in that** each modulation frequency is associated with a digit or a string of digits according to a preset scheme that is known to the controller unit (15), wherein the relevant digit or string of digits is part of a unique identification of the transceiver unit (3), for example the serial number or the media access control address of the transceiver unit (3).

6. An optical WDM transmitting and receiving device according to one of the preceding claims, **characterised in that** the controller unit (15) considers the abort criterion to have been met when the tuning reception signal (Eₜₛ) reaches or exceeds a preset minimum reception level.

7. An optical WDM transmitting and receiving device according to claim 6, **characterised in that** the controller unit (15) considers the abort criterion to have been met when in addition the tuning reception signal (Eₜₛ) is identical with the tuning transmission signal (Sₜₛ) or has preset characteristic properties of the tuning transmission signal (Sₜₛ).

8. An optical WDM transmitting and receiving device according to claim 7 with its indirect reference to claim 4, **characterised in that** the controller unit (15) detects the tuning reception signal (Eₜₛ) in a phase-sensitive manner and uses as information for this the modulation frequency that is known respectively.

9. An optical WDM transmitting and receiving device according to one of claims 6 to 8, **characterised in that** the controller unit (15) determines the attenuation value between the detected tuning reception signal (Eₜₛ) and the optical tuning transmission signal (Sₜₛ) and in addition considers the abort criterion to have been met only when the attenuation value is smaller than a preset maximum value, for the determination of which in particular the crosstalk attenuation of the multiplexer unit (19) and the demultiplexer unit (33) of the optical filter unit (5) of the WDM transmitting and receiving device is taken into account as well as the attenuation of the optical path which the tuning transmission signal (Sts) traverses until received as the tuning reception signal (Eₜₛ) by the receiving unit (37).

10. An optical WDM transmitting and receiving device according to one of claims 6 to 9, **characterised in that** the controller unit (15) determines the attenuation value between the detected tuning reception signal (Eₜₛ) and the optical tuning transmission signal (Sₜₛ) and in addition considers the abort criterion to have been met only when the attenuation value is greater than a preset maximum value, for the determination of which in particular the insertion attenuation of the multiplexer unit (19) and the demultiplexer unit (33) of the WDM transmitting and receiving device (1) is taken into account as well as the attenuation of the optical path which the tuning transmission signal (Sₜₛ) traverses until received by the receiving unit as the tuning reception signal (Eₜₛ).

11. An optical WDM transmitting and receiving device according to one of the preceding claims, **characterised**
(a) **in that** the WDM output port (25) of the multiplexer unit (19) is connected to an input port of an optical splitter unit (43), whose one output port can be connected to an optical transmission link and whose other output port is connected to the loop-back path, and
(b) **in that** the WDM input port (31) of the demultiplexer unit (33) is connected to an output port of an optical combiner unit (45), whose one input port can be connected to the optical transmission link and whose other input port is connected to the loop-back path.

12. An optical WDM transmitting and receiving device according to one of the preceding claims, **characterised in that** arranged in the loop-back path there is an optical modulator unit (47) which can be activated by a control unit (49), and **in that** the controller unit (15) of the transceiver unit (3) in the tuning mode acquires and evaluates and/or stores the information that is modulated upon the detected tuning reception signal (Eₜₛ) by the control unit (49) by means of the optical modulator unit (47).

13. An optical WDM transmitting and receiving device according to claim 12, **characterised in that** the information contains characteristic data of the WDM filter unit (5) comprising the multiplexer unit (19), the demultiplexer unit (33), the control unit (49) and the loop-back path including modulator (47).

14. An optical WDM transmitting and receiving device according to claim 13, **characterised in that** the characteristic data comprise the serial number and/or the number of channels and/or the carrier wavelengths of the individual channels.

## Revendications

1. Dispositif optique d'émission et de réception de multiplexage en longueur d'onde (WDM) avec une unité émetteur-récepteur optique (3) et une unité optique de filtrage (5),
(a) dans lequel l'unité émetteur-récepteur optique (3) présente une unité d'émission (7),
(i) à laquelle un signal de données (S_{d,Tx}) peut être acheminé vers un port de signal de données (9), l'unité d'émission (7) acheminant ledit signal, converti en un signal d'émission optique correspondant, vers un port de sortie (17) optique de l'unité émetteur-récepteur (3), lequel port de sortie peut être relié à un port d'entrée de canal (CH₁ à CHₙ) prédéfini d'une unité optique de multiplexage (19) comprise dans l'unité optique de filtrage (5), à chaque port d'entrée de canal (CH₁ à CHₙ) de l'unité optique de multiplexage (19) étant affectée une longueur d'onde de canal (λ₁ à λₙ) qui lui est propre, et
(ii) laquelle présente un module optique d'émission (13) qui, au vu de sa longueur optique d'onde porteuse, peut être accordé sur une plage de longueurs d'onde prédéfinie,
(iii) l'unité d'émission (7) étant conçue de telle sorte qu'à l'intérieur de la plage de longueurs d'onde prédéfinie peuvent être réglées des longueurs d'onde discrètes qui correspondent respectivement aux longueurs d'onde de canal (λ₁ à λₙ),
(b) dans lequel l'unité émetteur-récepteur optique (3) présente une unité de réception (37) vers laquelle un signal optique de réception peut être acheminé, via un port d'entrée (35) de l'unité émetteur-récepteur optique (3), depuis un port de sortie de canal (ch₁ à chₙ) d'une unité de démultiplexage optique (33) comprise dans l'unité optique de filtrage (5) aux ports de sortie de canal (ch₁ à chₙ) de laquelle sont affectés respectivement les mêmes longueurs d'onde de canal (λ₁ à λₙ) qu'aux ports d'entrée de canal (CH₁ à CHₙ) de l'unité optique de multiplexage (19), l'unité de réception (37) convertissant ledit signal optique de réception en un signal de réception électrique, et
(c) dans lequel l'unité émetteur-récepteur optique (3) présente une unité contrôleur (15), laquelle pilote l'unité d'émission (7) de telle sorte que soit produit un signal optique d'émission doté d'une longueur d'onde de canal (λ₁ à λₙ) prédéfinie,
(d) dans lequel l'unité de réception (37) achemine le signal de réception converti d'optique en électrique vers l'unité contrôleur (15).
**caractérisé en ce que**
(e) au port d'entrée de canal (CH₁ à CHₙ) de l'unité optique de multiplexage (19), lequel port d'entrée est relié au port de sortie (17) de l'unité émetteur-récepteur optique (3), est affectée la même longueur d'onde de canal (λ₁ à λₙ) qu'au port de sortie de canal (ch₁ à chₙ) de l'unité de démultiplexage optique (33), lequel port de sortie est relié au port d'entrée (35) de l'unité émetteur-récepteur optique (3),
(f) une partie de la puissance optique du signal d'émission WDM (S_{SDM, Tx}) produit au niveau d'un port de sortie WDM (25) de l'unité de multiplexage (19) est ré-acheminée, via un chemin de bouclage, vers un port d'entrée WDM (31) de l'unité de démultiplexage (33), et
(g) l'unité contrôleur (15) peut être commandée dans un mode de syntonisation, dans lequel les actions suivantes sont effectuées :
(i) l'unité contrôleur (15) commande l'unité d'émission (7) de telle sorte qu'un signal optique d'émission de syntonisation (Sₜₛ) doté d'une longueur d'onde de canal (λ₁ à λₙ) prédéterminée soit produit ;
(ii) l'unité contrôleur (15) évalue alors un signal de réception (Eₜₛ) qui lui est acheminé en réaction au signal d'émission de syntonisation (Sₜₛ) produit, pour déterminer si un critère d'abandon pour le mode de syntonisation est satisfait ou non ;
(iii) si le critère d'abandon est satisfait, l'unité contrôleur (15) termine le mode de syntonisation et, dans un mode de fonctionnement de l'unité émetteur-récepteur (3), commande l'unité d'émission (7) de telle sorte que le signal de données (S_{d,Tx}) acheminé vers le port de signal de données (9) soit converti en un signal d'émission optique doté de la longueur d'onde de canal (λ₁ à λₙ) pour laquelle le critère d'abandon avait été détecté dans le mode de syntonisation ;
(iv) si le critère d'abandon n'est pas satisfait, l'unité contrôleur (15) poursuit le mode de syntonisation avec une étape supplémentaire conformément aux caractéristiques (g) (ii) et (g) (iii) de la revendication, l'unité contrôleur (15) pilotant l'unité d'émission dans l'étape supplémentaire de telle sorte que soit produit un signal optique d'émission de syntonisation (Sₜₛ) doté d'une longueur d'onde de canal (λ₁ à λₙ) non encore utilisée.

2. Dispositif d'émission et de réception optique WDM selon la revendication 1, **caractérisé en ce que** dans chaque étape de la syntonisation, l'unité d'émission (7) produit le signal optique d'émission de syntonisation (Sₜₛ) doté de la longueur d'onde de canal (λ₁ à λₙ) respectivement utilisée de telle sorte que
(a) le signal d'émission de syntonisation (Sₜₛ) corresponde au signal de données (S_{D,Tx}) acheminé vers l'unité d'émission (7), ou
(b) le signal d'émission de syntonisation (Sₜₛ) corresponde au signal de données (S_{D,Tx}) acheminé vers l'unité d'émission (7), au moins une propriété caractéristique imprimant ledit signal de données (S_{D,Tx}), laquelle propriété caractéristique est communiquée à l'unité d'émission (7) par l'unité contrôleur (15), ou
(c) le signal d'émission de syntonisation (Sₜₛ) corresponde à un signal d'identification (S_{ts,el}) acheminé par l'unité contrôleur (15) vers l'unité d'émission (7), lequel signal d'identification présente au moins une propriété caractéristique.

3. Dispositif d'émission et de réception optique WDM selon la revendication 2, **caractérisé en ce que** la au moins une propriété caractéristique du signal d'identification (S_{ts,el}) ou la au moins une propriété caractéristique imprimée au signal de données (S_{D,Tx}) est un paramètre déterminé d'une composante de modulation, de préférence avec une fréquence de modulation prédéfinie d'une modulation d'amplitude.

4. Dispositif d'émission et de réception optique WDM selon la revendication 3, **caractérisé en ce que** l'unité contrôleur (15) achemine un signal d'identification (S_{ts,el}) vers l'unité d'émission (7), lequel est un signal modulé en amplitude avec une seule fréquence de modulation ou avec plusieurs fréquences de modulation différentes, lesquelles varient selon une séquence chronologique.

5. Dispositif d'émission et de réception optique WDM selon la revendication 4, **caractérisé en ce que** chaque fréquence de modulation est affectée d'après un schéma prédéfini, connu de l'unité contrôleur (15), à un chiffre ou à une séquence de chiffres, le chiffre ou la séquence de chiffres afférent(e) étant une partie d'une identification univoque de l'unité émetteur-récepteur (3), par exemple du numéro de série, ou de l'adresse de contrôle d'accès au média, de l'unité émetteur-récepteur (3).

6. Dispositif d'émission et de réception optique WDM selon l'une quelconque des revendications précédentes, **caractérisé en ce que** l'unité contrôleur (15) considère le critère d'abandon comme satisfait lorsque le signal de réception de syntonisation (Eₜₛ) a atteint ou dépassé un niveau de réception minimal prédéfini.

7. Dispositif d'émission et de réception optique WDM selon la revendication 6, **caractérisé en ce que** l'unité contrôleur (15) considère le critère d'abandon comme satisfait lorsque le signal de réception de syntonisation (Eₜₛ) est en plus identique au signal d'émission de syntonisation (Sₜₛ) ou présente en plus des propriétés caractéristiques prédéfinies du signal d'émission de syntonisation (Sₜₛ).

8. Dispositif d'émission et de réception optique WDM selon la revendication 7 quand celle-ci renvoie indirectement à la revendication 4, **caractérisé en ce que** l'unité contrôleur (15) détecte avec sensibilité de phase le signal de réception de syntonisation (Eₜₛ) et utilise pour cela comme information la fréquence de modulation respectivement connue.

9. Dispositif d'émission et de réception optique WDM selon l'une quelconque des revendications 6 à 8, **caractérisé en ce que** l'unité contrôleur (15) détermine la valeur d'affaiblissement entre le signal de réception de syntonisation (Eₜₛ) détecté et le signal optique d'émission de syntonisation (Sₜₛ) et ne considère en plus le critère d'abandon comme satisfait que lorsque la valeur d'atténuation est inférieure à une valeur maximale prédéfinie, pour la détermination de laquelle sont prises en compte en particulier les affaiblissements diaphoniques de l'unité de multiplexage (19) et de l'unité de démultiplexage (33) de l'unité optique de filtrage (5) du dispositif d'émission et de réception WDM, ainsi que l'affaiblissement du chemin optique que le signal d'émission de syntonisation (Sₜₛ) parcourt jusqu'à la réception en tant que signal de réception de syntonisation (Eₜₛ) à travers l'unité de réception (37).

10. Dispositif d'émission et de réception optique WDM selon l'une quelconque des revendications 6 à 8, **caractérisé en ce que** l'unité contrôleur (15) détermine la valeur d'affaiblissement entre le signal de réception de syntonisation (Eₜₛ) détecté et le signal optique d'émission de syntonisation (Sₜₛ) et ne considère en plus le critère d'abandon comme satisfait que lorsque la valeur d'atténuation est supérieure à une valeur maximale prédéfinie, pour la détermination de laquelle sont prises en compte en particulier les affaiblissements d'insertion de l'unité de multiplexage (19) et de l'unité de démultiplexage (33) du dispositif d'émission et de réception WDM (1), ainsi que l'affaiblissement du chemin optique que le signal d'émission de syntonisation (Sₜₛ) parcourt jusqu'à la réception à travers l'unité de réception (37) en tant que signal de réception de syntonisation (Eₜₛ).

11. Dispositif d'émission et de réception optique WDM selon l'une quelconque des revendications précédentes, **caractérisé en ce que**
(a) le port de sortie WDM (25) de l'unité de multiplexage (19) est relié à un port d'entrée d'une unité optique de division (43), dont un port de sortie peut être relié à un trajet optique de transmission et dont l'autre port de sortie est relié au chemin de bouclage, et
(b) **en ce que** le port d'entrée WDM (31) de l'unité de démultiplexage (33) est relié à un port de sortie d'une unité optique de combinaison (45), dont un port d'entrée peut être relié au trajet optique de transmission et dont l'autre port d'entrée est relié au chemin de bouclage.

12. Dispositif d'émission et de réception optique WDM selon l'une quelconque des revendications précédentes, **caractérisé en ce que** dans le chemin de bouclage est agencée une unité optique modulatrice (47), laquelle peut être pilotée par une unité de commande (49) et **en ce que**, dans le mode de syntonisation, l'unité contrôleur (15) de l'unité émetteur-récepteur (3) saisit et évalue et/ou enregistre l'information modulée sur le signal de réception de syntonisation (Eₜₛ) détecté, information modulée par l'unité de commande (49) au moyen de l'unité optique modulatrice (47).

13. Dispositif d'émission et de réception optique WDM selon la revendication 12, **caractérisé en ce que** l'information comporte les données caractéristiques de l'unité de filtrage WDM (5) comprenant l'unité de multiplexage (19), l'unité de démultiplexage (33), l'unité de commande (49) et le chemin de bouclage y compris le modulateur (47).

14. Dispositif d'émission et de réception optique WDM selon la revendication 13, **caractérisé en ce que** les données caractéristiques comprennent le numéro de série et/ou le nombre de canaux et/ou les longueurs d'onde porteuse de chacun des canaux.
